# EUROPÄISCHE PATENTSCHRIFT

(11) **EP 2 828 511 B1**
(45) Veröffentlichungstag und Bekanntmachung des Hinweises auf die Patenterteilung: **25.09.2019**
(21) Anmeldenummer: 13709387.8
(22) Anmeldetag: 06.03.2013
(51) Int. Cl.: F02F 7/00

(54) **MASCHINEN- ODER FAHRZEUGKOMPONENTE**
MACHINE OR VEHICLE COMPONENT
COMPOSANT DE MACHINE OU DE VÉHICULE

(30) Priorität: 22.03.2012 DE 102012102470
(43) Veröffentlichungstag der Anmeldung: 28.01.2015
(73) Patentinhaber: ElringKlinger AG, 72581 Dettingen (DE)
(72) Erfinder: HERZEL, Matthias, 72818 Trochtelfingen (DE); GRUHLER, Tobias, Michael, 72793 Pfullingen (DE); LAICHINGER, Peter, 89150 Laichingen (DE)
(74) Vertreter: Hoeger, Stellrecht & Partner Patentanwälte mbB
(86) Internationale Anmeldenummer: PCT/EP2013/054470
(87) Internationale Veröffentlichungsnummer: WO 2013/139598

(56) Entgegenhaltungen:
- EP-A1- 1 835 162
- EP-A2- 1 338 783
- DE-U1-202006 011 672
- US-A1- 2009 235 892
- US-A1- 2011 180 963

## Beschreibung

Die Erfindung betrifft eine Maschinen- oder Fahrzeugkomponente, umfassend ein erstes Gehäuseteil, ein das erste Gehäuseteil abdeckendes zweites Gehäuseteil, eine im zweiten Gehäuseteil vorgesehen Öffnung und eine die Öffnung durchgreifende funktionelle Anbaueinheit mit einem Montageelement aus einem struktursteifen Material, ein das erste Gehäuseteil abdeckendes zweites Gehäuseteil, welches aus einem gering struktursteifen Thermoplastmaterial ausgebildet ist, eine im zweiten Gehäuseteil vorgesehene Öffnung, eine die Öffnung durchgreifende und als Stelleinheit ausgebildete funktionelle Anbaueinheit mit einem ein Funktionsteil aufnehmenden Montageelement aus einem struktursteifen Material, wobei die Anbaueinheit mittels des Montageelements an dem Tragelement gehalten ist und das Tragelement mit einem Tragring versehen ist, welchen ein das Funktionsteil aufnehmender und am Tragring anliegender Fortsatz des Montageelements der Anbaueinheit durchgreift, wobei das Tragelement das Montageelement ohne Kraftübertragung über das zweite Gehäuseteil trägt, und wobei das Tragelement eine Anlagefläche aufweist, auf welcher das Montageelement mit einer Montagefläche abgestützt ist.

Derartige Maschinen- oder Fahrzeugkomponenten sind aus der DE 20 2006 011 672 U1 bekannt.

Beispielsweise sind derartige Maschinen- oder Fahrzeugkomponenten Verbrennungsmotoren, wobei das erste Gehäuseteil von dem Motorblock umfasst ist und das zweite Gehäuseteil eine Abdeckung für den Motorblock, insbesondere im Bereich der Ventile, darstellt.

Die Maschinen- oder Fahrzeugkomponente kann aber auch eine andere Antriebs- oder Betätigungskomponente sein, beispielsweise eine Getriebeeinheit etc.

Bei derartigen Maschinen- oder Fahrzeugkomponenten wirkt die funktionelle Anbaueinheit mit der Maschinen- oder Fahrzeugkomponente zusammen, beispielsweise durch Steuerungs- und/oder Antriebs- und/oder Antriebsfunktionen.

Die Anbaueinheit, die das zweite Gehäuseteil im Bereich der Öffnung durchgreift, kann beispielsweise eine Stelleinheit oder eine andere Einheit, wie beispielsweise eine Pumpe oder ein Generator sein, für deren Zusammenwirken mit der Maschinen- und Fahrzeugkomponente eine präzise Positionierung und/oder Aufnahme von hohen Kräften relativ zum ersten Gehäuseteil erforderlich ist.

Somit besteht das Problem, dass die funktionelle Anbaueinheit dann am zweiten Gehäuseteil montiert werden kann, wenn dessen Struktursteifigkeit ausreichend ist, um die funktionelle Anbaueinheit dauerhaft in stabiler Position zu halten.

Der Erfindung liegt daher die Aufgabe zugrunde, eine Maschinen- und Fahrzeugkomponente der eingangs beschriebenen Art dahingehend zu verbessern, dass diese aus kostengünstigen Komponenten herstellbar ist, und dass funktionelle Anbaueinheiten im Bereich des zweiten Gehäuseteils montiert werden können.

Diese Aufgabe wird bei einer Maschinen- oder Fahrzeugkomponente erfindungsgemäß durch die Merkmale des Anspruchs 1 gelöst.

Der Vorteil der erfindungsgemäßen Lösung ist darin zu sehen, dass durch das Vorsehen des Tragelements und des Montageelements die Kräfte zum Halten der Anbaueinheit auf ein Teil aus struktursteifem Material, nämlich den Träger mit dem Tragelement, übergeleitet werden können, so dass das zweite Gehäuseteil aus dem gering struktursteifen Material nicht durch die Kräfte zum Halten der Anbaueinheit beaufschlagt ist.

Hinsichtlich der Verbindung zwischen dem Tragelement und dem Montageelement ist erfindungsgemäß vorgesehen, dass das Tragelement das Montageelement ohne Kraftübertragung über das zweite Gehäuseteil trägt, so dass für die Fixierung der Anbaueinheit relativ zum Träger keinerlei Kräfte über das zweite Gehäuseteil übertragen werden und somit auch von diesem keine Kräfte aufgenommen werden müssen.

Erfindungsgemäß weist das Tragelement eine Anlagefläche auf, auf welcher das Montageelement mit einer Montagefläche abgestützt ist, insbesondere mit einer Montagefläche ohne ein dazwischenliegendes Element, wie beispielsweise eine zusätzliche Dichtung, aufliegt.

Dieses Merkmal schafft die Möglichkeit, die Anbaueinheit relativ zum Träger und somit relativ zum ersten Gehäuseteil exakt zu positionieren.

Um zusätzlich auch noch eine vorteilhafte Abdichtung im Bereich der Öffnung des zweiten Gehäuseteils zu erreichen, ist erfindungsgemäß vorgesehen, dass das zweite Gehäuseteil einen die Öffnung umschließend verlaufenden Dichtkragen aus dem gering struktursteifen Thermoplastmaterial aufweist, der unabhängig von den Kräften zum Halten der Anbaueinheit relativ zum Montageelement oder zum Tragelement abgedichtet ist.

Dadurch, dass die Abdichtung zwischen dem Dichtkragen des zweiten Gehäuseteils und dem Montageelement und dem Tragelement ebenfalls unabgängig von den Kräften zum Halten der Anbaueinheit erfolgt, kann die Belastung des Dichtkragens aus dem gering struktursteifen Thermoplastmaterial so gewählt werden, dass diese nicht zu einem Kriechen des wenig struktursteifen Thermoplastmaterials im Bereich des Dichtkragens führt.

Prinzipiell wäre es dabei denkbar, das plastische Material so zu formen, dass dieses dicht entweder an das Montageelement oder an das Tragelement angelegt werden kann.

Eine andere Möglichkeit wäre die, eine Klebeverbindung zwischen dem Dichtkragen und dem Montageelement oder dem Tragelement zu schaffen.

Die erfindungsgemäße Lösung sieht ferner vor, dass der Dichtkragen mittels einer Dichtung aus elastischem Material relativ zum Montagelement oder zum Tragelement abgedichtet ist.

Eine derartige Dichtung aus elastischem Material schafft in einfacher Weise die Möglichkeit, die zum Abdichten des Dichtkragens auf diese einwirkenden Kräfte so zu reduzieren, dass kein Kriechen oder ein unterkritisches Kriechen des Materials des Dichtkragens aus gering struktursteifem Thermoplastmaterial erfolgt.

Die erfindungsgemäße Lösung sieht vor, dass der Dichtkragen mindestens gegen das Montageelement oder das Tragelement durch eine zwischen einer Abdichtseite des Dichtkragens und dem Montageelement oder dem Tragelement wirkende und dabei quer zur Dichtkragenebene Dichtpressungskräfte erfahrende Dichtung abgedichtet ist.

Diese Lösung hat den Vorteil, dass die Dichtpressungskräfte zur Dichtkragenebene wirken, so dass die Möglichkeit besteht, über den Dichtkragen die Dichtpressungskräfte einzuleiten, wobei diese so bemessen werden können, dass der Dichtkragen aus dem gering struktursteifen Material kein Kriechen oder nur ein unterkritisches Kriechen zeigt.

Eine weitere vorteilhafte Lösung sieht vor, dass der Dichtkragen auf einer der Abdichtseite gegenüberliegenden Abstützseite abgestützt ist, das heißt, dass diesbezüglich der Dichtkragen eine Abstützung zur Aufnahme der Dichtpressungskräfte erfährt.

Insbesondere die Abstützung des Dichtkragens auf der der Abdichtseite gegenüberliegenden Seite trägt auch dazu bei, das Kriechen zu vermeiden oder auf einen unterkritischen Wert zu reduzieren.

Diese Abstützung könnte beispielsweise durch ein Element erfolgen, das mit dem Montageelement oder dem Tragelement verbunden ist, relativ zu welchem der Dichtkragen durch die Dichtung abgedichtet ist.

Eine besonders günstige Lösung sieht jedoch vor, dass der Dichtkragen auf der Abstützseite durch das Tragelement oder das Stützelement abgestützt ist, also durch das Element, relativ zu welchem der Dichtkragen mittels der Dichtung nicht abgedichtet ist.

Eine besonders günstige Lösung sieht dabei vor, dass der Dichtkragen relativ zu dem Montageelement oder dem Tragelement, relativ zu welchem eine Abdichtung mittels der Dichtung erfolgt, in einer definiert vorgegebenen Position gehalten ist.

Eine derartige definiert vorgegebene Position des Dichtkragens zu dem Montageelement oder dem Tragelement lässt sich in einfacher Weise dadurch erreichen, dass der Dichtkragen in der definiert vorgegebenen Position durch ein zwischen dem Dichtkragen und dem Montageelement oder dem Tragelement wirkendes Anschlagelement gehalten ist.

Insbesondere ist dabei vorgesehen, dass die Dichtung durch die definierte Position des Dichtkragens und des Montageelements oder des Tragelements relativ zueinander elastisch deformiert ist und dass somit aus dieser elastischen Deformation der Dichtung die Dichtpressungskräfte, die zwischen dem Dichtflansch und der Dichtung sowie der Dichtung und dem Montageelement oder dem Tragelement wirksam sind, resultieren.

Erfindungsgemäß ist vorgesehen, dass die Dichtung Dichtpressungskräfte erfährt, die so bemessen sind, dass die Dichtung an dem Dichtkragen und dem Montageelement oder dem Tragelement wirksam abdichtend anliegt und dass die Dichtpressungskräfte insbesondere so bemessen sind, dass der Dichtkragen keine Deformation durch Kriechen des gering struktursteifen Thermoplastmaterials erfährt.

Um sicherzustellen, dass die Dichtpressungskräfte lediglich durch die Deformation der elastischen Dichtung bedingt sind und keine höheren Kräfte auf den Dichtkragen wirken, ist vorzugsweise vorgesehen, dass die Dichtung einen Spalt zwischen dem Dichtkragen und dem Montageelement oder dem Tragelement überbrückt und an beiden abdichtend anliegt, wobei durch den Spalt sichergestellt ist, dass kein unmittelbares Anliegen des Dichtkragens an dem Montageelement oder dem Tragelement erfolgt und somit keine höheren Dichtpressungskräfte auf den Dichtkragen wirken, als die, die durch die elastische Deformation des Dichtelements bedingt sind.

Um in einfacher Weise eine Fixierung des Dichtkragens relativ zu dem Montageelement oder dem Tragelement zu erreichen, ist vorteilhafterweise vorgesehen, dass das Tragelement und das Montageelement eine Dichtkragenaufnahme für den Dichtkragen bilden.

Das heißt, dass die Dichtkragenaufnahme sowohl durch das Montagelement als auch das Tragelement begrenzt ist, so dass sich der Dichtkragen in einfacher Weise dann in die Dichtkragenaufnahme einsetzen lässt, wenn das Montageelement noch nicht auf das Tragelement aufgesetzt ist.

Durch das Aufsetzen des Montageelements auf das Tragelement lässt sich dabei der Dichtkragen in der Dichtkragenaufnahme so fixieren, dass der Dichtkragen nicht mehr aus der Dichtkragenaufnahme herausbewegt werden kann.

Insbesondere ist die Dichtkragenaufnahme so ausgebildet, dass sie eine erste und eine zweite Aufnahmefläche aufweist, und dass der Dichtkragen an einer der Aufnahmeflächen mit einer Anlageseite anliegt.

Eine derartige Ausbildung schafft in einfacher Weise die Möglichkeit, den Dichtkragen an der Aufnahme abzustützen.

Ferner ist vorzugsweise vorgesehen, dass die Dichtung zwischen dem Dichtkragen, insbesondere einer Abdichtseite desselben, und der anderen Aufnahmefläche wirksam ist, insbesondere zwischen dem Dichtkragen und der anderen Aufnahmefläche angeordnet ist, und somit Dichtpressungskräfte auftreten, die dadurch entstehen, dass einerseits der Dichtkragen und andererseits die andere Aufnahmefläche auf die Dichtung wirken und diese zwischen diesen eingespannt ist.

Hinsichtlich der Anordnung der Dichtung wurden im Zusammenhang mit den bislang beschriebenen Ausführungsbeispielen keine näheren Angaben gemacht.

So sieht eine vorteilhafte Lösung vor, dass der Dichtkragen mit einer Dichtungsaufnahme für die Dichtung versehen ist.

Durch eine derartige Dichtungsaufnahme lässt sich die Dichtung einerseits exakt positionieren und andererseits verhindern, dass die Dichtung sich deformiert und dabei nicht vorgesehene Dichtungsformen einnimmt, die die Dichtwirkung beeinträchtigen.

Alternativ zum Vorsehen einer Dichtungsaufnahme in dem Dichtkragen sieht eine andere Lösung vor, dass das Montageelement mit einer Dichtungsaufnahme für den Dichtkragen versehen ist.

Eine andere alternative Lösung sieht vor, dass das Tragelement mit einer Dichtungsaufnahme für die Dichtung versehen ist.

Insbesondere im Fall einer formvariabel ausgebildeten Dichtung ist vorzugsweise vorgesehen, dass die Dichtungsaufnahme in einer Dichtungsfläche einen Verlauf der formvariablen Dichtung festlegt, die formvariable Dichtung ihren Verlauf in der Dichtungsebene nicht ändern und dadurch die Dichtwirkung beeinträchtigen kann.

Beispielsweise ist in diesem Fall die Dichtungsaufnahme als Vertiefung ausgebildet, in welche eine formvariable Dichtung einlegbar ist, so dass der Verlauf der formvariablen Dichtung durch den Verlauf der Vertiefung vorgegeben ist.

Dabei ist beispielsweise unter einer formvariablen Dichtung ein Ring aus einem Elastomermaterial, im einfachsten Fall ein O-Ring, zu verstehen, dessen Verlauf in der Dichtungsfläche durch die als Vertiefung ausgebildete Dichtungsaufnahme vorgegeben werden kann.

Alternativ zum Vorsehen einer Dichtungsaufnahme sieht eine andere vorteilhafte Lösung vor, dass die Dichtung frei zwischen einer ersten oder einer zweiten Kragenfläche und einer der Aufnahmeflächen liegt.

In diesem Fall ist es zweckmäßig, wenn die Dichtung als formsteife Dichtung ausgebildet ist.

Ein Beispiel einer derartigen formsteifen Dichtung sieht vor, dass die Dichtung mindestens einen Dichtungskörper aus einem elastischen Material und einem formsteifen Dichtungsträger aufweist.

Dabei gibt der Dichtungsträger die Form und somit den Verlauf des Dichtungskörpers vor, so dass keine Dichtungsaufnahme zur Festlegung des Verlaufs der Dichtung in der Dichtungsfläche notwendig ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Ansicht einer erfindungsgemäßen Maschinen- oder Fahrzeugkomponente, in diesem Fall eines Verbrennungsmotors;
- Fig. 2: einen Schnitt längs Linie 2-2 in Fig. 1 durch ein erstes Ausführungsbeispiel der erfindungsgemäßen Maschinen- oder Fahrzeugkomponente;

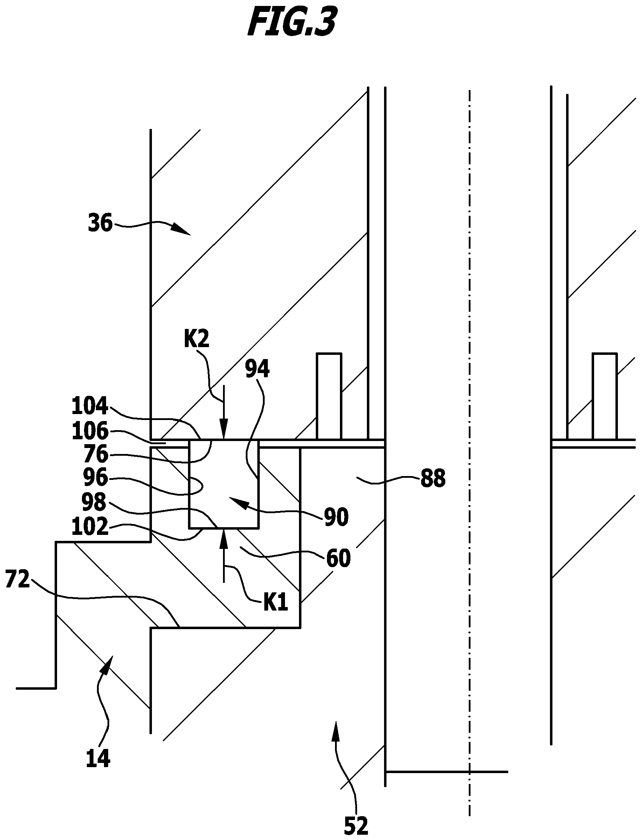

- Fig. 3: eine vergrößerte Darstellung des Bereichs A in Fig. 2;
- Fig. 4: einen Schnitt ähnlich Fig. 2 durch ein zweites Ausführungsbeispiel der erfindungsgemäßen Maschinen- oder Fahrzeugkomponente;
- Fig. 5: eine Schnitt ähnlich Fig. 2 durch ein drittes Ausführungsbeispiel einer erfindungsgemäßen Maschinen- oder Fahrzeugkomponente;
- Fig. 6: einen Schnitt ähnlich Fig. 2 durch ein viertes Ausführungsbeispiel einer erfindungsgemäßen Maschinen- oder Fahrzeugkomponente;
- Fig. 7: einen Schnitt ähnlich Fig. 2 durch ein fünftes Ausführungsbeispiel einer erfindungsgemäßen Maschinen- oder Fahrzeugkomponente;
- Fig. 8: einen Schnitt ähnlich Fig. 2 durch ein sechstes Ausführungsbeispiel einer erfindungsgemäßen Maschinen- oder Fahrzeugkomponente;
- Fig. 9: einen Schnitt ähnlich Fig. 2 durch ein siebtes Ausführungsbeispiel einer erfindungsgemäßen Maschinen- oder Fahrzeugkomponente und
- Fig. 10: einen Schnitt ähnlich Fig. 2 durch ein achtes Ausführungsbeispiel einer erfindungsgemäßen Maschinen- oder Fahrzeugkomponente.

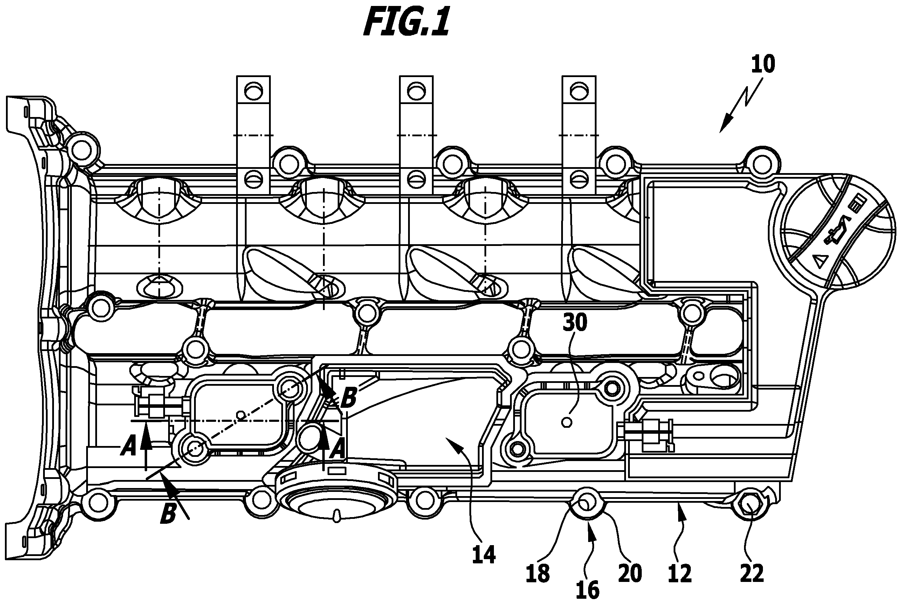

Ein Ausführungsbeispiel einer erfindungsgemäßen Fahrzeugkomponente, beispielsweise eines Verbrennungsmotors 10 eines Kraftfahrzeugs, dargestellt in Fig. 1, weist einen Motorblock auf, der ein erstes Gehäuseteil 12 mit umfasst. Dieses erste Gehäuseteil 12 wird durch ein in Fig. 1 dargestelltes zweites Gehäuseteil 14, in diesem Fall ausgebildet als Haube, abgedeckt, wobei die Haube vorzugsweise aus einem Material geringer Struktursteifigkeit, beispielsweise aus einem fasergefüllten Thermoplastmaterial, hergestellt ist, während der das erste Gehäuseteil 12 umfassende Motorblock üblicherweise aus einem struktursteifen Material, wie zum Beispiel Metall, hergestellt ist.

Das erste Gehäuseteil 12 und das zweite Gehäuseteil sind durch Schraubverbindungen 16 miteinander verbunden, wobei jede Schraubverbindung 16 eine Schrauböse 18 im zweiten Gehäuseteil 14 und eine entsprechende in Fig. 1 nicht erkennbare Schrauböse 20 im ersten Gehäuseteil 12 aufweist, in welche eine Schraube 22 einschraubbar ist, so dass die Schraubösen 18 und 20 zur Herstellung der Schraubverbindung 16 miteinander verbindbar und gegeneinander anlegbar sind.

Das Problem der Verschraubung des zweiten Gehäuseteils 14 mit dem ersten Gehäuseteil 12 besteht darin, dass das aus gering struktursteifem Material hergestellte zweite Gehäuseteil 14 im Bereich der Schraubverbindungen 16 nicht durch sehr große Kräfte beaufschlagt werden darf, da die Schraubösen 18 des gering struktursteifen Thermoplastmaterials bei hohen Anzugskräften der Schraubverbindungen 16 die Tendenz haben zu kriechen, das heißt, dass die Kraft, mit welcher die beiden Schraubösen 18 und 20 in Richtung aufeinanderzu beaufschlagbar sind, unter einer Kraftschwelle für das Kriechen des Materials der Schraubösen 18 liegen muss.

Aus diesem Grund sind die Schraubverbindungen 16 so auszulegen, dass diese keine aufgrund hoher Anzugsmomente bedingten und zum Kriechen des fasergefüllten Thermoplastmaterials führenden Anpresskräfte erzeugen.

Unter einem Kriechen des fasergefüllten Thermoplastmaterials ist dabei eine Formveränderung zu verstehen, die bei ständiger Kraftbeaufschlagung eines Bauteils im Laufe der Zeit auftritt und somit die Dimensionen des Bauteils verändert, wobei die dabei entstehenden Maßänderungen im Bezug auf die Ausgangsmaße mindestens 0,5 Prozent betragen, üblicherweise mindestens im einstelligen Prozentbereich liegen.

Im Fall des Verbrennungsmotors 10 stellt die Haube 14 insbesondere eine Ventilabdeckung dar, welche den von den Ventilen eingenommenen Innenraum 24 zusammen mit dem Motorblock gegenüber der Umgebung dicht abschließt.

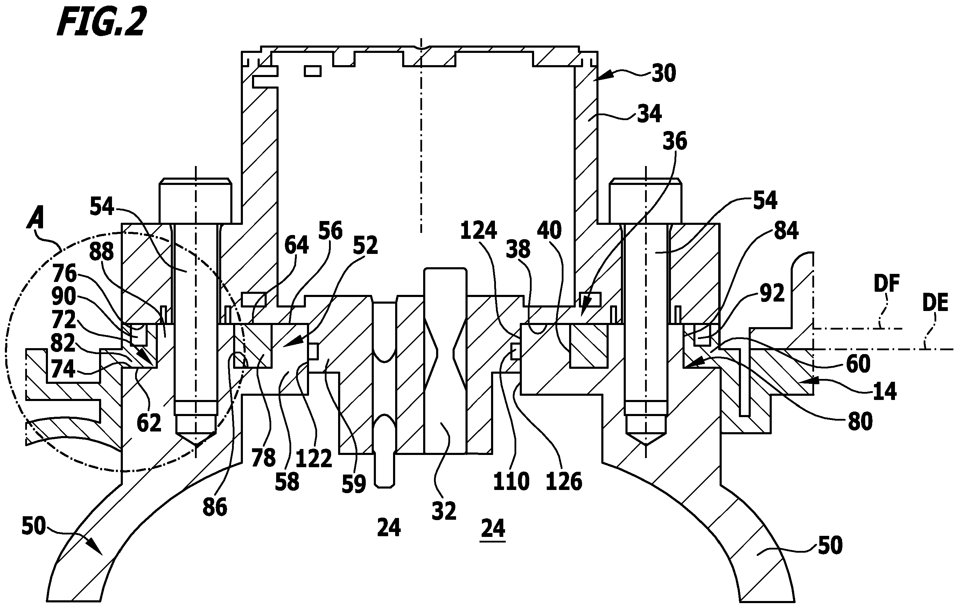

Um beispielsweise die Ventilsteuerzeiten einstellen zu können, sind als Stelleinheiten ausgebildete Anbaueinheiten 30 vorgesehen, die, wie bei einem ersten Ausführungsbeispiel in Fig. 2 dargestellt, mit einem Funktionsteil 32 eine Öffnung 40 in dem zweiten Gehäuseteil 14 durchgreifen, um Funktionen der Maschinen- oder Fahrzeugkomponente, in diesem Fall Steuerzeiten der Ventile, zu beeinflussen.

Aufgrund der geringen Struktursteifigkeit des zweiten Gehäuseteils 14 aus Thermoplastmaterial sitzen die als Stelleinheiten ausgebildeten funktionellen Anbaueinheiten 30 nicht auf dem zweiten Gehäuseteil 14 und werden von diesem getragen, sondern auf einem Träger 50, welcher relativ zum ersten Gehäuseteil 12 feststehend und durch dieses abgestützt angeordnet ist und ein Tragelement 52 aufweist, auf welchem ein Gehäuse 34 der Stelleinheit 30 mit einem Montageelement 36 unmittelbar aufsitzt.

Dabei ist zumindest das Montageelement 36 der Stelleinheit 30 aus einem struktursteifen Material ausgebildet und in gleicher Weise sind das Tragelement 52 und der Träger 50 aus einem struktursteifen Material ausgebildet, so dass das Montageelement 36 und das Tragelement 52 struktursteif relativ zueinander abgestützt sind und dabei beispielsweise durch Schrauben 54 kraftbeaufschlagt miteinander verbunden sind.

Damit sind die Stelleinheiten 30 relativ zum ersten Gehäuseteil 12, das heißt zum Motorblock, stabil und dauerhaft präzise positioniert angeordnet, um eine durch die Stelleinheiten 30 wahrzunehmende Funktionsbeeinflussung der Maschinen- oder Fahrzeugkomponente, in diesem Fall des Verbrennungsmotors, zuverlässig sicherstellen zu können.

Aus diesem Grund ist zum Beispiel das Tragelement 52 mit einer Auflagefläche 56 versehen, an welcher das Montageelement 36 mit seiner Montagefläche 38 anliegt, so dass sich das Montageelement 36 unmittelbar an dem Tragelement 52 abstützt.

Vorzugsweise ist dabei das Tragelement 52 mit einem Tragring 58 versehen, welchen ein das Funktionsteil 32 aufnehmender und am Tragring 58 anliegender Fortsatz 59 des Montageelements 36 der Stelleinheit 30 durchgreift.

Um im Bereich des Tragelements 52 und des Montageelements 36 einen dichten Abschluss zu dem zweiten Gehäuseteil 14 herstellen zu können, ist das zweite Gehäuseteil 14 mit einem Dichtkragen 60 aus faserverstärktem Thermoplastmaterial versehen, welcher um die Öffnung 40 im zweiten Gehäuseteil 14 umlaufend und diese umschließend angeordnet ist.

Der Dichtkragen 60 weist eine erste Kragenfläche 62 und eine zweite Kragenfläche 64 auf, die auf einander gegenüberliegenden Seiteneiner Dichtkragenebene DE, in welcher der Dichtkragen 60 liegt, angeordnet sind.

Der Dichtkragen 60 liegt dabei vorzugsweise in einer Dichtkragenaufnahme 72, welche von dem Tragelement 52 und dem Montageelement 36 gebildet wird und eine der ersten Kragenfläche 62 zugewandte erste Aufnahmefläche 74 aufweist, die beispielsweise an dem Tragelement 52 angeordnet ist, sowie eine der ersten Aufnahmefläche 74 gegenüberliegende und der zweiten Kragenfläche 64 zugewandte zweite Aufnahmefläche 76, die an dem Montageelement 36 angeordnet ist.

Im einfachsten Fall umfasst die Dichtkragenaufnahme 72 eine stufenförmige Nut 80 im Tragelement 52, welche einen die erste Aufnahmefläche 74 bildenden Nutboden 82 sowie eine Nutwand 84 aufweist, die quer zum Nutboden 82 und somit auch quer zur ersten Aufnahmefläche 74 und zur zweiten Aufnahmefläche 76 verläuft.

In dem Fall, dass die Nut 80 ausschließlich im Tragelement 52 angeordnet ist, liegt die von dem Montageelement 36 gebildete zweite Aufnahmefläche 76 beispielsweise in derselben Ebene wie die Montagefläche 38.

Bei dem in Fig. 2 dargestellten ersten Ausführungsbeispiel könnte es ausreichend sein, die Dichtkragenaufnahme 72 so auszubilden, dass diese den um die Öffnung 40 umlaufenden Dichtkragen 60 aufnimmt. Bei dem dargestellten Ausführungsbeispiel ist der Dichtkragen 60 im Bereich der Schrauben 54 mit einer Halteöse 78 versehen, welche in einer um die jeweilige Schraube 54 umlaufenden Vertiefung 86 des Tragrings 58 liegt und beispielsweise eine die Schraube 54 aufnehmende Schraubhülse 88 des Tragelements 52 umgreift, wobei die Schraubhülse 88 bis zur Montagefläche 38 reicht und eine Teilfläche der Auflagefläche 56 bildet.

Die Auflagefläche 56 und die Montagefläche 38 bilden somit Anschlagelemente, welche den Abstand der ersten Aufnahmefläche 74 und der zweiten Aufnahmefläche 76 relativ zueinander festlegen.

Zur Abdichtung zwischen dem zweiten Gehäuseteil 14 im Bereich des Dichtkragens 60 und dem Montageelement 36 ist eine formvariable Dichtung 90 vorgesehen, welche zur Festlegung eines Verlaufs derselben in einer Dichtungsfläche DF in einer im Dichtkragen 60 vorgesehenen und um die Öffnung 40 umlaufenden Dichtungsaufnahme 92 liegt, die beispielsweise als zur zweiten Kragenfläche 64 des Dichtkragens 60 hin offene Nut ausgebildet ist und eine innere Seitenwand 94 sowie eine äußere Seitenwand 96 aufweist, die sich über einem Boden 98 der Nut erheben, wobei der Boden 98 der zweiten Aufnahmefläche 76 zugewandt angeordnet ist.

Die in der Dichtungsaufnahme 92 liegende Dichtung 90 steht über die eine Abdichtseite darstellende zweite Kragenfläche 64 des Dichtkragens 60 über, während die an der ersten Aufnahmefläche 74 anliegende erste Kragenfläche 74 die Abstützseite des Dichtkragens 60 bildet.

An der zweiten Aufnahmefläche 76 liegt somit die Dichtung 90 mit einer ersten Dichtungsanlagefläche 102 der Dichtung 90 an, während die Dichtung 90 an dem Boden 98 der Dichtungsaufnahme 92 mit einer zweiten Dichtungsanlagefläche 104 anliegt, so dass sich die Dichtung 90 zwischen der ersten Dichtungsanlagefläche 102 des Montageelements 36 und der zweiten Dichtungsanlagefläche 104 des Tragelements 52 erstreckt und dabei eine Linienpressung mit jeweils quer zu der Dichtkragenebene DE und senkrecht zu den Dichtungsanlageflächen 102 und 104 ausgerichteten Dichtpressungskräften K1 und K2 erfährt, die geringer sind als die Kraft, die ein Kriechen des Materials des Dichtkragens 60 auslöst.

Vorzugsweise wird die Dichtung 90 im montierten Zustand zwischen der ersten Dichtungsanlagefläche 102 und der zweiten Dichtungsanlagefläche 104 soweit elastisch deformiert, dass diese Deformation die quer zu den Dichtungsanlageflächen 102 und 104 gerichteten Dichtpressungskräfte K1 und K2 aufgrund der Eigenelastizität erzeugt. Dabei verbleibt zwischen der zweiten Kragenfläche 64 und der zweiten Aufnahmefläche 76 ein Spalt 106, da der Abstand der ersten Dichtungsanlagefläche 102 und der zweiten Dichtungsanlagefläche 104 voneinander durch die Lage der Montagefläche 38 des Montageelements 36 und die Lage der Aufnahmefläche 56 des Tragelements 52, die als Anschlagelemente wirken und den Abstand der zweiten Aufnahmefläche 76 von der ersten Aufnahmefläche 74 festlegen, vorgegeben ist, wobei dieser Abstand größer ist als der Abstand der Kragenflächen 62 und 64 voneinander.

Somit ermöglicht es die Dichtung 90 einen dichten Abschluss zwischen einerseits der ersten Dichtungsanlagefläche 102 des zweiten Gehäuseteils 14 und andererseits dem Montageelement 36 und somit auch dem Gehäuse 34 der Stelleinheit 30 herzustellen, ohne dass der Dichtkragen 60 selbst mit den Kragenflächen 62 und 64 zwischen den Aufnahmeflächen 74 und 76 eingespannt und mit großen Kräften beaufschlagt wird.

Da der Träger 50, der fest relativ zum ersten Gehäuseteil 12 angeordnet ist, von dem zweiten Gehäuseteil 14 übergriffen ist, ist eine Abdichtung zwischen dem Träger 50 und dem zweiten Gehäuseteil 14 nicht zwingend erforderlich, solange ein dichter Abschluss zwischen dem zweiten Gehäuseteil 14, in diesem Fall dem Dichtkragen 60 des zweiten Gehäuseteils 14, und dem Montageelement 36 der Stelleinheit 30 erfolgt.

Zur Sicherheit ist jedoch vorzugsweise zwischen dem Tragring 58 des Tragelements 52 und dem das Funktionsteil 32 aufnehmenden Fortsatz 59 noch eine Dichtung 110 vorgesehen, wobei in diesem Fall der Fortsatz 59 mit einer zylindrischen Führungsfläche 122 versehen ist und diese zylindrische Führungsfläche 122 eine Vertiefung 124 zur Aufnahme der Dichtung 110 aufweist.

Die Dichtung 110 stellt somit noch zusätzlich einen dichten Abschluss zwischen einer die zylindrische Führungsfläche 122 aufnehmenden Zylinderfläche 126 des Tragrings 58 her.

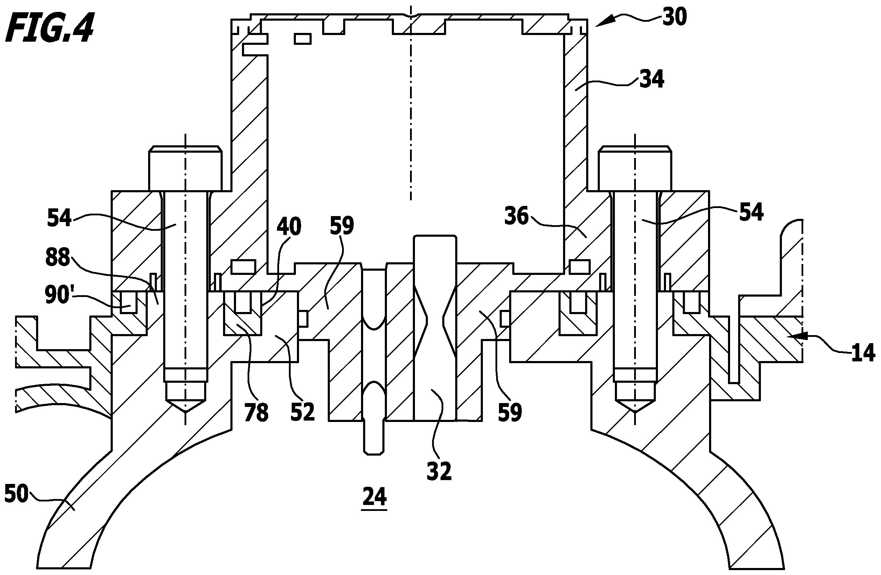

Bei einem zweiten Ausführungsbeispiel, dargestellt in Fig. 4 ist die Dichtungsaufnahme 92' so ausgebildet, dass sie auch in der Halteöse 78 um die Schraubhülse 88 herumverläuft, so dass folglich auch die Dichtung 90' nicht nur außen die Öffnung 40 umschließend verläuft, sondern auch in der Halteöse 78 um die jeweilige Schraube 54 und insbesondere auch die Schraubhülse 88 herumverläuft.

Bei diesem Ausführungsbeispiel wird somit die Abdichtung im Bereich der Halteöse 78 noch weiter verbessert.

Im Übrigen sind bei dem zweiten Ausführungsbeispiel diejenigen Elemente, die mit denen des ersten Ausführungsbeispiels identisch sind, mit denselben Bezugszeichen versehen, so dass vollinhaltlich auf die Ausführungen zum ersten Ausführungsbeispiel Bezug genommen werden kann.

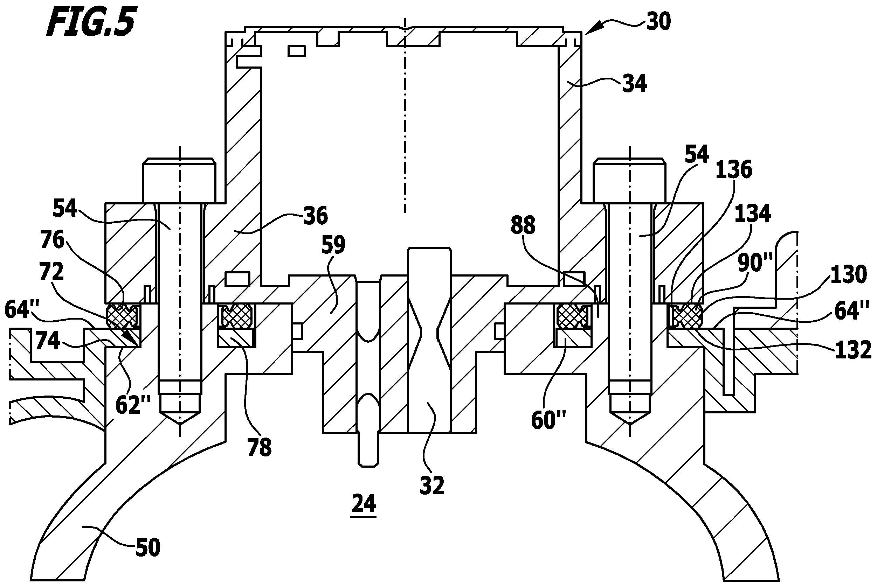

Bei einem dritten Ausführungsbeispiel, dargestellt in Fig. 5, ist der Dichtkragen 60" nicht mit einer Dichtungsaufnahme versehen, sondern so ausgebildet, dass dieser nach wie vor mit der ersten Kragenfläche 62" auf der ersten Aufnahmefläche 74 der Dichtkragenaufnahme 72 aufliegt, während eine zweite Kragenfläche 64" im Abstand von der zweiten Aufnahmefläche 74, die am Montageelement 36 angeordnet ist, steht.

Zwischen der zweiten Kragenfläche 74 und der zweiten Aufnahmefläche 76 liegt in diesem Fall die formsteif ausgebildete Dichtung 90", welche einen elastischen Dichtungskörper 130 beispielsweise aus Weichstoff aufweist, der mit einer ersten Dichtungsanlagefläche 132 an der zweiten Kragenfläche 64" dichtend anliegt und mit der zweiten Dichtungsanlagefläche 134 an der zweiten Aufnahmefläche 76 dichtend anliegt.

Zur Stabilisierung des an sich formvariablen elastischen Dichtungskörpers 130 ist ein Dichtungsträger 136 vorgesehen, welcher zwischen der zweiten Kragenfläche 64" und der zweiten Aufnahmefläche 76 neben dem Dichtungskörper 130 angeordnet ist und aus einem struktursteifen Profilmaterial ausgebildet ist, welches mit dem Dichtungskörper 130 durch seitliches Einklemmen desselben fest verbunden ist.

Alternativ dazu ist es aber auch denkbar, den Dichtungsträger 136 plattenförmig auszubilden und beidseitig mit jeweils einem Dichtungskörper zu beschichten.

Bei dem dritten Ausführungsbeispiel ist ferner ebenfalls vorgesehen, dass der Dichtungskörper 130 im Bereich der Halteöse 78 auf dieser aufliegt und um die jeweilige Schraube 54 und insbesondere auch die jeweilige Schraubhülse 88 herum verläuft.

Im Übrigen ist das dritte Ausführungsbeispiel in gleicher Weise ausgebildet wie die voranstehenden Ausführungsbeispiele, so dass vollinhaltlich auf die Ausführungen zu den voranstehenden Ausführungsbeispielen Bezug genommen werden kann.

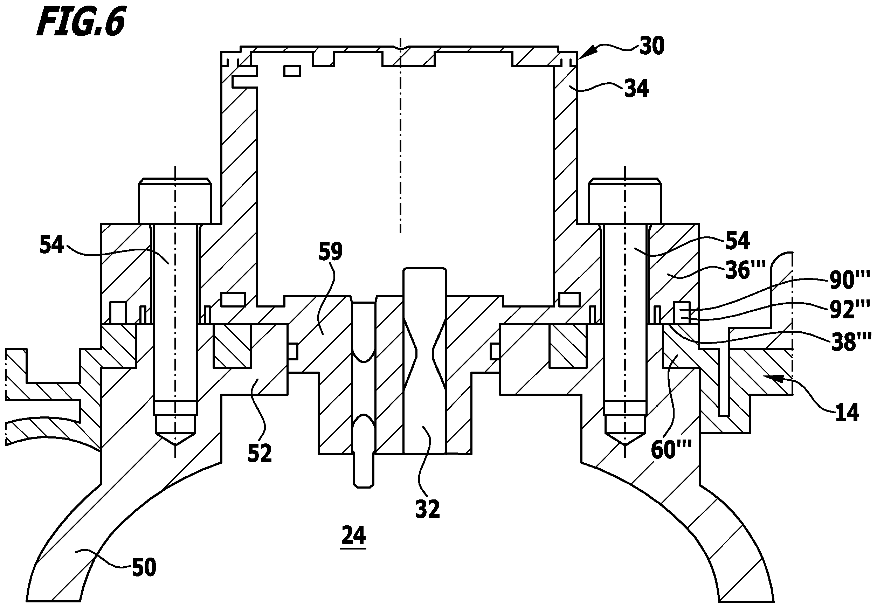

Bei einem vierten Ausführungsbeispiel, dargestellt in Fig. 6, erfolgt die Abdichtung mit der formvariabel ausgebildeten Dichtung 90"' in gleicher Weise wie beim ersten Ausführungsbeispiel, und zwar ebenfalls zwischen dem Montageelement 36 und dem Dichtkragen 60, wobei in diesem Fall die Dichtung 90"' in einer Dichtungsaufnahme 92"' liegt, welche nicht im Dichtkragen 60"' vorgesehen ist, sondern in dem Montageelement 36"' und dabei zur Montagefläche 38"' hin offen ist.

Im Übrigen erfolgt die Abdichtung bei dem vierten Ausführungsbeispiel nach denselben Prinzipien, wie im Zusammenhang mit dem ersten Ausführungsbeispiel beschrieben, so dass hinsichtlich der Dichtungsaufnahme 92"' und der Dichtung 90"' sowie der Funktion derselben vollinhaltlich auf die Ausführungen zum ersten Ausführungsbeispiel Bezug genommen werden kann.

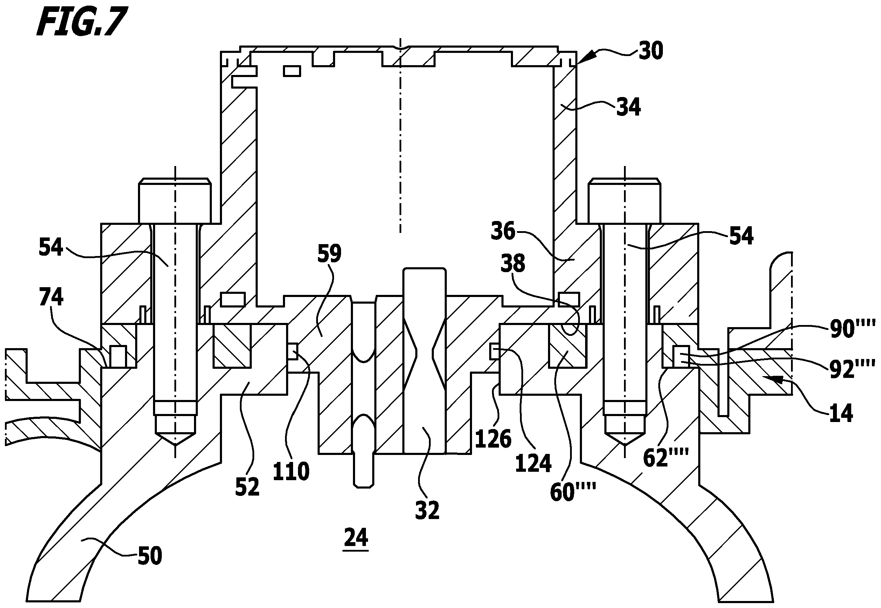

Bei einem fünften Ausführungsbeispiel, dargestellt in Fig. 7, ist der Dichtkragen 60"" mit einer Dichtungsaufnahme 92"" versehen, welche zur ersten Kragenfläche 62"" des Dichtkragens 60"" hin offen ist, so dass die in dieser Dichtungsaufnahme 92"" angeordnete Dichtung 90"" eine Abdichtung zwischen dem Dichtkragen 60"" und dem Tragelement 52, insbesondere der Aufnahmefläche 74 bewirkt.

Die Dichtung 90"" kann dabei in gleicher Weise ausgebildet sein, wie bei dem ersten und vierten Ausführungsbeispiel und auch die Dichtungsaufnahme 92"" ist in entsprechender Weise ausgebildet.

Der dichte Abschluss zwischen dem Dichtkragen 60"" und dem Tragelement 52 hat jedoch zur Folge, dass zwischen dem Dichtkragen 60"" und dem Montageelement 36, insbesondere der Montagefläche 38 desselben keine zuverlässige Abdichtung mehr vorliegt.

Aus diesem Grund ist es bei diesem Ausführungsbeispiel zwingend die Dichtung 110 vorzusehen, die eine Abdichtung zwischen dem Funktionsteil 32 der Stelleinheit 30 und dem Tragelement 52, insbesondere eine Abdichtung zwischen der Aufnahme 124 und der zylindrischen Fläche 126 bewirkt, wie dies im Zusammenhang mit dem ersten Ausführungsbeispiel erläutert wurde.

Bei diesem Ausführungsbeispiel ist somit der Innenraum 24 zwischen dem ersten Gehäuseteil 12 und dem zweiten Gehäuseteil 14 einerseits durch die Dichtung 110 zwischen dem Fortsatz 59 des Montageelements 36 der Stelleinheit 30 und andererseits durch die Dichtung 90"" zwischen dem Dichtkragen 60"" des zweiten Gehäuseteils 14 und dem Tragelement 52 abgedichtet.

Im Übrigen wird hinsichtlich derjenigen Teile, die mit denen der voranstehenden Ausführungsbeispiele identisch sind und mit denselben Bezugszeichen versehen sind, vollinhaltlich auf die Ausführungen zu den voranstehenden Ausführungsbeispielen, insbesondere auch zum ersten Ausführungsbeispiel Bezug genommen.

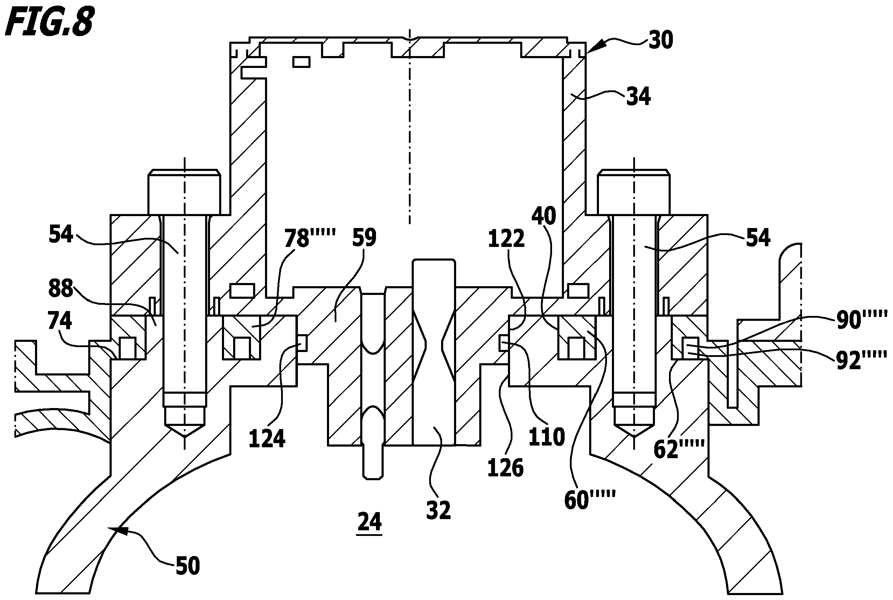

Bei einem sechsten Ausführungsbeispiel einer erfindungsgemäßen Maschinen- oder Fahrzeugkomponente, dargestellt in Fig. 8, verläuft die formvariable Dichtung 95""' nicht nur außen um die Öffnung 40 des Dichtkragens 60""' herum, sondern auch noch im Bereich der Halteösen 78""' um die jeweilige Schraube 54 und insbesondere auch die Schraubhülse 88 herum.

Im Übrigen ist die Dichtungsaufnahme 92""' in ähnlicher Weise ausgebildet, wie beim zweiten Ausführungsbeispiel, allerdings mit dem Unterschied, dass sie zur ersten Kragenfläche 62""' hin offen ist und eine Abdichtung mit der ersten Aufnahmefläche 74 bewirkt.

Im Übrigen sind diejenigen Teile, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

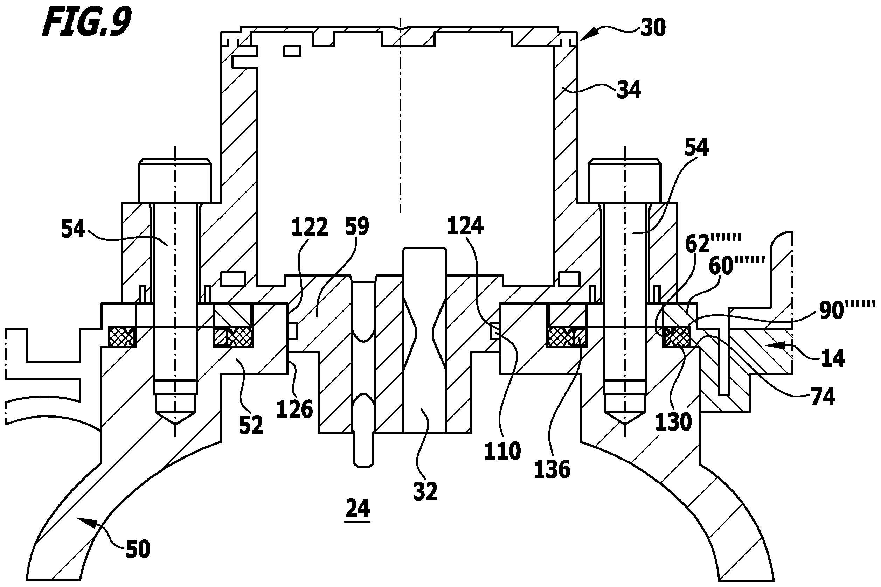

Bei einem siebten Ausführungsbeispiel, dargestellt in Fig. 9, erfolgt die Abdichtung zwischen dem Dichtkragen 60""" und dem Tragelement 52 durch eine formsteife Dichtung 90""", welche ähnlich der Dichtung 90" gemäß Fig. 5 ausgebildet ist, das heißt einen elastischen Dichtungskörper 130 aufweist, der von einem Dichtungsträger 136 gehalten ist.

Auch bei diesem Ausführungsbeispiel erfolgt nun eine Abdichtung zwischen der ersten Kragenfläche 62""" des Dichtkragens und der ersten Aufnahmefläche 74 des Tragelements 52, so dass insgesamt eine Abdichtung zwischen dem zweiten Gehäuseteil 14 und dem Tragelement 52 erfolgt.

Im Übrigen wird hinsichtlich des Aufbaus der Dichtung 90""" und der Funktion derselben vollinhaltlich auf die Ausführungen zum dritten Ausführungsbeispiel gemäß Fig. 5 Bezug genommen und ferner sind sämtliche Teile des siebten Ausführungsbeispiels, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

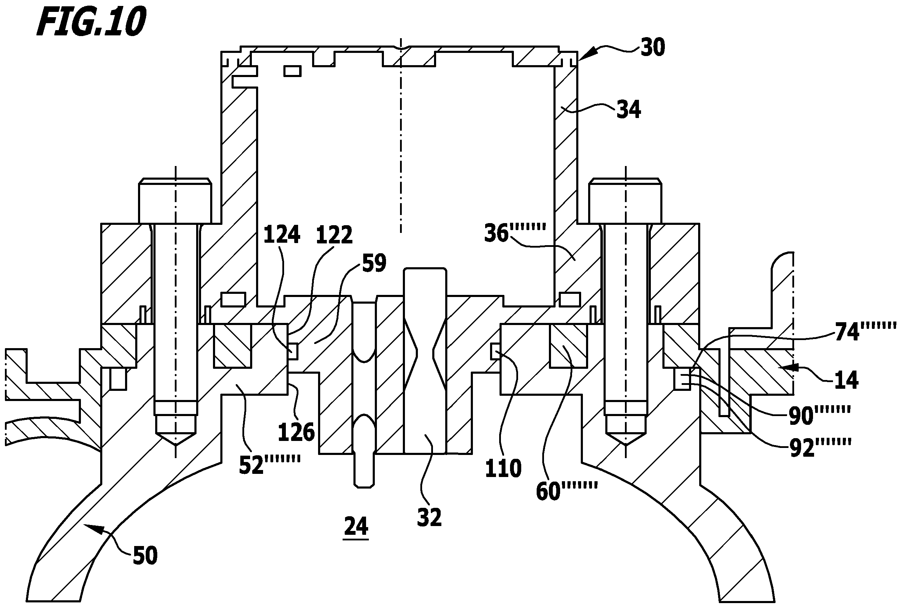

Bei einem achten Ausführungsbeispiel, dargestellt in Fig. 10, ist die Dichtungsaufnahme 92"""' zur Aufnahme der Dichtung 90"""' in ähnlicher Weise ausgebildet, wie beim fünften Ausführungsbeispiel gemäß Fig. 7, allerdings mit dem Unterschied, dass die Dichtungsaufnahme in dem Tragelement 52"""' angeordnet ist, und zwar so, dass die Dichtungsaufnahme 92"""' zur ersten Aufnahmefläche 74"""' hin offen ist und somit eine Abdichtung zwischen dem Dichtkragen 60"""' des zweiten Gehäuseteils 14 und dem Tragelement 52 bewirkt.

Im Übrigen wird hinsichtlich der weiteren Merkmale des achten Ausführungsbeispiels vollinhaltlich auf die Ausführungen zu den voranstehenden Ausführungsbeispielen Bezug genommen.

## Patentansprüche

1. Maschinen- oder Fahrzeugkomponente, umfassend ein erstes Gehäuseteil (12), einen relativ zum ersten Gehäuseteil (12) feststehend angeordneten Träger (50) mit einem Tragelement (52) aus einem struktursteifen Material,
ein das erste Gehäuseteil (12) abdeckendes zweites Gehäuseteil (14), welches aus einem gering struktursteifen Thermoplastmaterial ausgebildet ist,
eine im zweiten Gehäuseteil (14) vorgesehene Öffnung (40), eine die Öffnung (40) durchgreifende und als Stelleinheit ausgebildete funktionelle Anbaueinheit (30) mit einem ein Funktionsteil (32) aufnehmenden Montageelement (36) aus einem struktursteifen Material, wobei die Anbaueinheit (30) mittels des Montageelements (36) an dem Tragelement (52) gehalten ist und das Tragelement (52) mit einem Tragring (58) versehen ist, welchen ein das Funktionsteil (32) aufnehmender und am Tragring (58) anliegender Fortsatz (59) des Montageelements (36) der Anbaueinheit (30) durchgreift, wobei das Tragelement (52) das Montageelement (36) ohne Kraftübertragung über das zweite Gehäuseteil (14) trägt, und wobei das Tragelement (52) eine Anlagefläche (56) aufweist, auf welcher das Montageelement (36) mit einer Montagefläche (38) abgestützt ist, **dadurch gekennzeichnet , dass** das zweite Gehäuseteil (14) einen die Öffnung (40) umschließend verlaufenden Dichtkragen (60) aus dem gering struktursteifen Thermoplastmaterial aufweist, der unbeaufschlagt von den Kräften zum Halten der Anbaueinheit (30) relativ zum Montageelement (36) oder zum Tragelement (52) abgedichtet ist, dass der Dichtkragen (60) mindestens gegen eines der Elemente, das Montageelement (36) oder das Tragelement (52), durch eine zwischen einer Abdichtseite des Dichtkragens (60) und dem Montageelement (36) oder dem Tragelement (52) wirkende und dabei quer zu einer Dichtkragenebene (DE) Dichtpressungskräfte erfahrende Dichtung (90) abgedichtet ist, dass der Dichtkragen (60) mittels einer Dichtung (90) aus elastischem Material relativ zum Montageelement (36) oder zum Tragelement (52) abgedichtet ist, dass die Dichtung (90) Dichtpressungskräfte (K1, K2) erfährt, die so bemessen sind, dass die Dichtung (90) an dem Dichtkragen (60) und dem Montageelement (36) oder dem Tragelement (52) wirksam abdichtend anliegt, und dass die Dichtpressungskräfte (K1, K2) so bemessen sind, dass der Dichtkragen (60) keine Deformation durch Kriechen des Thermoplastmaterials erfährt.

2. Maschinen- oder Fahrzeugkomponente nach Anspruch 1, **dadurch gekennzeichnet, dass** der Dichtkragen (60) relativ zu dem Montageelement (36) oder dem Tragelement (52), relativ zu welchem eine Abdichtung mittels der Dichtung (90) erfolgt, in einer definiert vorgegebenen Position gehalten ist.

3. Maschinen- oder Fahrzeugkomponente nach Anspruch 2, **dadurch gekennzeichnet, dass** der Dichtkragen (60) in der definiert vorgegebenen Position durch ein zwischen dem Dichtkragen (60) und dem Montageelement (36) oder dem Tragelement (52) wirkendes Anschlagelement gehalten ist.

4. Maschinen- oder Fahrzeugkomponente nach einem der Ansprüche 2 oder 3, **dadurch gekennzeichnet, dass** die Dichtung (90) durch die definierte Position des Dichtkragens (60) und des Montageelements (36) oder des Tragelements (52) relativ zueinander elastisch deformiert ist.

5. Maschinen- oder Fahrzeugkomponente nach einem der Ansprüche 1 bis 4, **dadurch gekennzeichnet, dass** die Dichtung (90) einen Spalt (106) zwischen Dichtkragen (60) und dem Montageelement (36) oder dem Tragelement (52) überbrückt und an beiden abdichtend anliegt.

6. Maschinen- oder Fahrzeugkomponente nach einem der Ansprüche 1 bis 5, **dadurch gekennzeichnet, dass** das Tragelement (52) und das Montageelement (36) eine Dichtkragenaufnahme (72) für den Dichtkragen (60) bilden und dass insbesondere die Dichtkragenaufnahme (72) eine erste Aufnahmefläche (74) und eine zweite Aufnahmefläche (76) aufweist und dass der Dichtkragen (60) an einer der Aufnahmeflächen (76, 74) anliegt.

7. Maschinen- oder Fahrzeugkomponente nach Anspruch 6, **dadurch gekennzeichnet, dass** die Dichtung (90) zwischen dem Dichtkragen (60) und der anderen Aufnahmefläche (74, 76) wirksam ist.

8. Maschinen- oder Fahrzeugkomponente nach einem der voranstehenden Ansprüche, **dadurch gekennzeichnet, dass** das Montageelement (36) mit einer Dichtungsaufnahme (92) für die Dichtung (90) versehen ist.

9. Maschinen- oder Fahrzeugkomponente nach einem der voranstehenden Ansprüche, **dadurch gekennzeichnet, dass** das Tragelement (52) mit einer Dichtungsaufnahme (92) für die Dichtung (90) versehen ist.

10. Maschinen- oder Fahrzeugkomponente nach einem der voranstehenden Ansprüche, **dadurch gekennzeichnet, dass** die Dichtung (90) formvariabel ausgebildet ist und dass die Dichtungsaufnahme (92) in einer Dichtungsfläche (DF) einen Verlauf der Dichtung (90) festlegt.

11. Maschinen- oder Fahrzeugkomponente nach einem der voranstehenden Ansprüche, **dadurch gekennzeichnet, dass** die Dichtung (90) frei zwischen einer der Kragenflächen (62, 64) und einer der Aufnahmeflächen (72, 74) liegt

12. Maschinen- oder Fahrzeugkomponente nach einem der voranstehenden Ansprüche, **dadurch gekennzeichnet, dass** die Dichtung (90) als formsteife Dichtung ausgebildet ist und dass insbesondere die Dichtung (90) mindestens einen Dichtungskörper (130) aus einem elastischen Material und einen formsteifen Dichtungsträger (136) aufweist.

## Claims

1. A machine or vehicle component comprising a first housing part (12), a carrier (50) fixed relative to the first housing part (12) and having a carrying element (52) consisting of a structurally rigid material,
a second housing part (14) covering the first housing part (12) and which consists of a thermoplastic material with low structural rigidity,
an opening (40) which is provided in the second housing part (14), a functional attachment unit (30) extending through the opening (40) and configured as an adjusting unit, the attachment unit (30) having a mounting element (36) consisting of a structurally rigid material and accommodating a functional part (32), wherein the attachment unit (30) is held on the carrying element (52) by means of the mounting element (36), and the carrying element (52) is provided with a carrying ring (58) through which passes an extension (59) of the mounting element (36) of the attachment unit (30), the extension receiving the functional part (32) and adjoining the carrying ring (58), wherein the carrying element (52) carries the mounting element (36) without transferring forces via the second housing part (14), and wherein the carrying element (52) has a contact surface (56) on which the mounting element (36) is supported by a mounting surface (38), **characterized in that** the second housing part (14) comprises a sealing collar (60) consisting of the thermoplastic material of low structural rigidity which surrounds the opening (40) and is sealed relative to the mounting element (36) or the carrying element (52) without being subjected to the forces for holding the attachment unit (30), **in that** the sealing collar (60) is sealed at least against one of the elements, the mounting element (36) or the carrying element (52), by a seal (90) which is effective between a sealing side of the sealing collar (60) and the mounting element (36) or the carrying element (52) and is thereby subjected to seal compression forces transversely relative to a plane (DE) of the sealing collar ,**in that** the sealing collar (60) is sealed relative to the mounting element (36) or the carrying element (52) by means of a seal (90) consisting of resilient material, **in that** the seal (90) is subjected to seal compression forces (K1, K2) which are dimensioned such that the seal (90) abuts the sealing collar (60) and the mounting element (36) or the carrying element (52) so as to provide effective sealing, and **in that** the seal compression forces (K1, K2) are dimensioned such that the sealing collar (60) does not experience a deformation due to creepage of the thermoplastic material.

2. A machine or vehicle component in accordance with Claim 1, **characterized in that** the sealing collar (60) is held in a defined predetermined position relative to the mounting element (36) or the carrying element (52), relative to which sealing by means of the seal (90) is effected.

3. A machine or vehicle component in accordance with Claim 2, **characterized in that** the sealing collar (60) is held in the defined predetermined position by a stop element which is effective between the sealing collar (60) and the mounting element (36) or the carrying element (52).

4. A machine or vehicle component in accordance with either of the Claims 2 or 3, **characterized in that** the seal (90) is resiliently deformed by the defined position of the sealing collar (60) and the mounting element (36) or the carrying element (52) relative to each other.

5. A machine or vehicle component in accordance with any of the Claims 1 to 4, **characterized in that** the seal (90) bridges a gap (106) between the sealing collar (60) and the mounting element (36) or the carrying element (52) and abuts both in sealing manner.

6. A machine or vehicle component in accordance with any of the Claims 1 to 5, **characterized in that** the carrying element (52) and the mounting element (36) form a sealing collar seating (72) for the sealing collar (60) and **in that** in particular the sealing collar seating (72) comprises a first seating surface (74) and a second seating surface (76) and **in that** the sealing collar (60) abuts one of the seating surfaces (76, 74).

7. A machine or vehicle component in accordance with Claim 6, **characterized in that** the seal is effective (90) between the sealing collar (60) and the other seating surface (74, 76).

8. A machine or vehicle component in accordance with any of the preceding Claims, **characterized in that** the mounting element (36) is provided with a sealing seating (92) for the seal (90).

9. A machine or vehicle component in accordance with any of the preceding Claims, **characterized in that** the carrying element (52) is provided with a seal seating (92) for the seal (90).

10. A machine or vehicle component in accordance with any of the preceding Claims, **characterized in that** the seal (90) is of variable shape, and **in that** the seal seating (92) is a seal surface (DF) specifies a contour for the seal (90).

11. A machine or vehicle component in accordance with any of the preceding Claims, **characterized in that** the seal (90) lies freely between one of the collar surfaces (62, 64) and one of the seating surfaces (72, 74).

12. A machine or vehicle component in accordance with any of the preceding Claims, **characterized in that** the seal (90) is in the form of a seal of fixed shape and **in that** in particular the seal (90) comprises at least one seal body (130) consisting of a resilient material and a seal carrier (136) of a fixed shape.

## Revendications

1. Composant de machine ou de véhicule, comprenant une première partie de boîtier (12), un support (50) disposé de manière immobile par rapport à la première partie de boîtier (12) avec un élément de support (52) d'un matériau à structure rigide,
une deuxième partie de boîtier (14) recouvrant la première partie de boîtier (12), laquelle est réalisée à partir d'un matériau thermoplastique à structure moins rigide,
une ouverture (40) prévue dans la deuxième partie de boîtier (14), une unité rapportée (30) fonctionnelle traversant l'ouverture (40) et réalisée sous la forme d'une unité de réglage, avec un élément de montage (36) d'un matériau à structure rigide logeant une partie fonctionnelle (32) l'unité rapportée (30) est maintenue au moyen d'un élément de montage (36) au niveau de l'élément de support (52) et l'élément de support (52) est prévue avec une bague de support (58), qu'un prolongement (59), de l'élément de montage (36) de l'unité rapportée (30) logeant la partie fonctionnelle (32) et reposant au niveau de la bague de support (58), traverse la bague de support, dans lequel l'élément de support (52) supporte l'élément de montage (36) sans transmission de force par l'intermédiaire de la deuxième partie de boîtier (14), et dans lequel l'élément de support (52) présente une surface d'appui (56), sur laquelle l'élément de montage (36) est soutenu avec une surface de montage (38), **caractérisé en ce que** la deuxième partie de boîtier (14) présente un rebord étanche (60) s'étendant de manière à entourer l'ouverture (40), d'un matériau thermoplastique à structure moins rigide, qui est étanchéifié sans être soumis à l'action de forces servant à maintenir l'unité rapportée (30) par rapport à l'élément de montage (36) ou par rapport à l'élément de support (52), que le bord étanche (60) est étanchéifié au moins contre un des éléments parmi l'élément de montage (36) ou l'élément de support (52), par un joint d'étanchéité (90) agissant entre un côté d'étanchéification du rebord étanche (60) et l'élément de montage (36) ou l'élément de support (52) et subissant ce faisant des forces de compression d'étanchéité de manière transversale par rapport à un plan de rebord étanche (DE), que le rebord étanche (60) est étanchéifié au moyen d'un joint d'étanchéité (90) d'un matériau élastique par rapport à l'élément de montage (36) ou par rapport à l'élément de support (52), que le joint d'étanchéité (90) subit des forces de compression d'étanchéité (K1, K2) qui sont telles que le joint d'étanchéité (90) repose de manière active et étanche au niveau du rebord étanche (60) et de l'élément de montage (36) ou de l'élément de support (52), et que les forces de compression étanche (K1, K2) sont telles que le rebord étanche (60) ne subit aucune déformation liée au fluage du matériau thermoplastique.

2. Composant de machine ou de véhicule selon la revendication 1, **caractérisé en ce que** le rebord étanche (60) est maintenu dans une position spécifiée de manière définie par rapport à l'élément de montage (36) ou à l'élément de support (52), par rapport auquel une étanchéification a lieu au moyen du joint d'étanchéité (90).

3. Composant de machine ou de véhicule selon la revendication 2, **caractérisé en ce que** le rebord étanche (60) est maintenu dans la position spécifiée de manière définie par un élément de butée agissant entre le rebord étanche (60) et l'élément de montage (36) ou l'élément de support (52).

4. Composant de machine ou de véhicule selon l'une quelconque des revendications 2 ou 3, **caractérisé en ce que** le joint d'étanchéité (90) est déformé de manière élastique du fait de la position définie du rebord étanche (60) et de l'élément de montage (36) ou de l'élément de support (52) l'un par rapport à l'autre.

5. Composant de machine ou de véhicule selon l'une quelconque des revendications 1 à 4, **caractérisé en ce que** le joint d'étanchéité (90) surmonte une fente (106) entre le rebord étanche (60) et l'élément de montage (36) ou l'élément de support (52) et repose de manière étanche au niveau de ces deux derniers.

6. Composant de machine ou de véhicule selon l'une quelconque des revendications 1 à 5, **caractérisé en ce que** l'élément de support (52) et l'élément de montage (36) forment un logement de rebord étanche (72) pour le rebord étanche (60), et qu'en particulier le logement de rebord étanche (72) présente une première surface de logement (74) et une deuxième surface de logement (76) et que le rebord étanche (60) repose au niveau d'une des surfaces de logement (76, 74).

7. Composant de machine ou de véhicule selon la revendication 6, **caractérisé en ce que** le joint d'étanchéité (90) est actif entre le rebord étanche (60) et l'autre surface de logement (74, 76).

8. Composant de machine ou de véhicule selon l'une quelconque des revendications précédentes, **caractérisé en ce que** l'élément de montage (36) est pourvu d'un logement de joint d'étanchéité (92) pour le joint d'étanchéité (90).

9. Composant de machine ou de véhicule selon l'une quelconque des revendications précédentes, **caractérisé en ce que** l'élément de support (52) est pourvu d'un logement de joint d'étanchéité (92) pour le joint d'étanchéité (90).

10. Composant de machine ou de véhicule selon l'une quelconque des revendications précédentes, **caractérisé en ce que** le joint d'étanchéité (90) est réalisé de manière variable en forme, et que le logement de joint d'étanchéité (92) fixe dans une surface d'étanchéité (DF) un profil du joint d'étanchéité (90).

11. Composant de machine ou de véhicule selon l'une quelconque des revendications précédentes, **caractérisé en ce que** le joint d'étanchéité (90) se situe de manière libre entre une des surfaces de rebord (62, 64) et une des surfaces de logement (72, 74).

12. Composant de machine ou de véhicule selon l'une quelconque des revendications précédentes, **caractérisé en ce que** le joint d'étanchéité (90) est réalisé sous la forme d'un joint d'étanchéité à forme rigide, et qu'en particulier le joint d'étanchéité (90) présente au moins un corps d'étanchéité (130) d'un matériau élastique et un support d'étanchéité (136) à forme rigide.
